# FASCICULE DE BREVET EUROPEEN

(11) **EP 2 179 648 B1**
(45) Date de publication et mention de la délivrance du brevet: **03.12.2014**
(21) Numéro de dépôt: 09290784.9
(22) Date de dépôt: 14.10.2009
(51) Int. Cl.: A01N 1/02, F25D 3/08

(54) **Ensemble pour la préparation d'organes à transplanter**
Anordnung zur Vorbereitung von Organen zur Transplantation
Assembly for the preparation of organs to be transplanted

(30) Priorité: 23.10.2008 FR 0805896
(43) Date de publication de la demande: 28.04.2010
(73) Titulaire: MACO PHARMA, 59420 Mouvaux (FR)
(72) Inventeur: Coissac Blondel, Cécile, 59000 Lille (FR); Chavatte, Arnaud, 62330 Isbergues (FR)
(74) Mandataire: Sayettat, Julien Christian

(56) Documents cités:
- WO-A-97/49370
- US-A- 3 810 367

## Description

L'invention concerne un ensemble pour la préparation d'organes avant transplantation.

L'invention s'applique au domaine de la transplantation d'organes, tel que les reins, coeurs, poumons, foies, pancréas, intestins destinés à être transplantés chez un receveur.

Après le prélèvement d'un organe d'un donneur, l'organe doit notamment être lavé avec une solution de conservation pour éliminer au mieux le sang du donneur. En même temps, l'organe doit être maintenu à froid pour ralentir son métabolisme. Cette ischémie froide doit être limitée pour réduire les dommages aux organes.

La préparation de l'organe avant transplantation est réalisée directement sur un champ stérile placé dans une cuvette en inox remplie de glace stérile et de solution de conservation. Mais, cette pratique qui met en contact direct l'organe avec la glace engendre un risque de congélation d'une partie de l'organe.

En outre, cette cuvette en inox doit être nettoyée et stérilisée avant chaque utilisation pour éviter les risques de contaminations croisées. Ces manipulations nécessitent une gestion particulièrement génératrice de temps.

Pour améliorer les conditions de conservation de l'organe, il existe des machines de perfusion d'organe. Une telle machine est par exemple décrite dans le document WO-A1-2005/074681. Mais, ces machines qui permettent de contrôler la température de la solution de perfusion sont complexes. En outre, elles ne permettent pas d'accéder facilement à l'organe pour le préparer avant la transplantation.

Le document WO-A1-97/49370 décrit une table pour la préparation d'organes en vue de leur transplantation. La table comprend un système de réfrigération complexe et la position encastrée de la bassine contenant l'organe ne facilite pas sa manipulation.

L'invention propose un ensemble de préparation d'organes, stérilisable, à usage unique et permettant une manipulation aisée. De plus, l'ensemble permet de refroidir l'organe de façon contrôlée sans mettre en contact direct l'organe avec la source de froid.

A cet effet, l'invention propose un ensemble pour la préparation d'organes en vue de leur transplantation, comprenant :
- un récipient intégrant une cavité destinée à réceptionner l'organe et une solution de conservation d'organes, ladite cavité présentant un fond et une paroi latérale, une jupe périphérique étant raccordée à la paroi latérale de la cavité par une portée de sorte à former un espace ouvert entre ladite paroi latérale et ladite jupe périphérique, et
- un bloc support intégrant une chambre fermée dans laquelle est disposé un produit réfrigérant, au moins la partie supérieure de ladite chambre étant disposée dans l'espace ouvert, ledit bloc présentant un logement supérieur qui est agencé pour recevoir au moins le fond et une partie de la paroi latérale de la cavité, ladite chambre enveloppant ledit logement pour permettre la réfrigération de l'organe.

D'autres objets et avantages apparaîtront au cours de la description qui suit.
La figure 1 représente une vue schématique en coupe et en trois dimensions de l'ensemble pour la préparation d'organes selon l'invention.
Les figures 2 et 3 représentent une vue schématique en coupe de l'ensemble de la figure 1 intégrant un plateau en position haute et basse, respectivement.
Les figures 4 et 5 représentent une vue schématique de dessus et de dessous, respectivement, du récipient de l'ensemble de la figure 1.
La figure 6 représente une vue schématique du plateau de l'ensemble selon l'invention.
La figure 7 représente une vue schématique en trois dimensions du bloc support de l'ensemble de la figure 1.
La figure 8 représente une vue schématique en coupe et en trois dimensions du bloc support de l'ensemble de la figure 1.
La figure 9 représente une vue schématique en coupe du bloc support muni d'un bouchon.
La figure 10 représente une vue schématique en trois dimensions d'un bloc support muni de poignées.
La figure 11 représente une vue de dessus d'une variante d'un récipient d'un ensemble selon l'invention comportant deux jeux d'ergots.

Dans la description, les termes "haut", "bas", "horizontal" et "vertical" sont définis par rapport à l'ensemble pour la préparation d'organes lors de son utilisation.

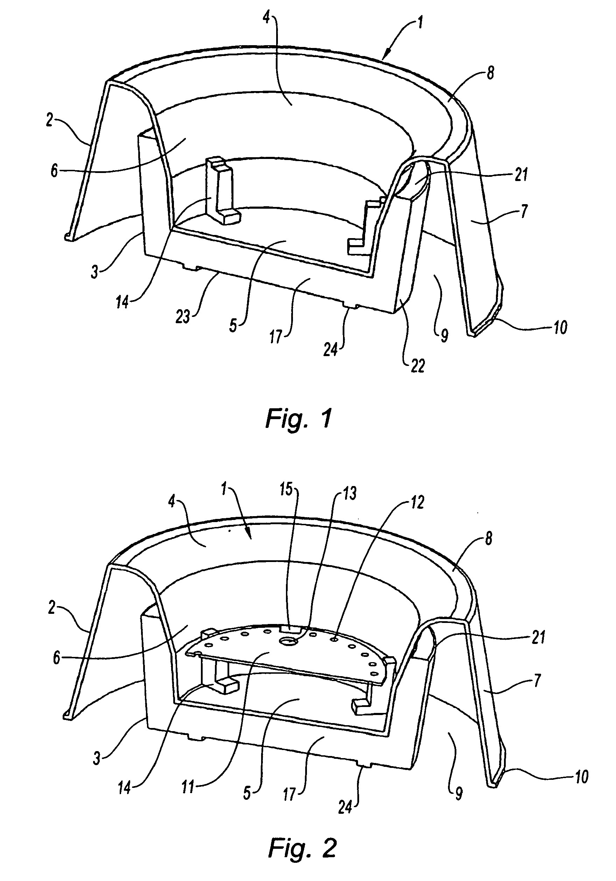

En relation avec les figures 1 à 3, l'invention concerne un ensemble 1 pour la préparation d'organes en vue de leur transplantation comprenant deux éléments distincts : un récipient 2 et un bloc support 3.

Cet ensemble est utilisé pour la dissection des organes, notamment le coeur, le rein, le foie, l'intestin ou le pancréas. Lors de leur préparation en vue de leur transplantation chez un receveur, ces organes doivent baigner dans une solution de conservation d'organes, telle que la Solution de Conservation d'Organes et Tissus commercialisée par Maco Pharma (Tourcoing, France).

Comme représenté sur les figures 1 à 4, le récipient intègre une cavité 4 destinée à réceptionner l'organe et une solution de conservation d'organes.

La cavité présente un fond 5 et une paroi latérale 6. Sur les figures 1 à 4, le fond 5 est plat et en forme de disque. La paroi latérale 6 s'étend vers le haut à partir du fond. Elle s'étend d'abord substantiellement verticalement de sorte à former un cylindre puis s'évase ensuite vers le haut de sorte que l'ouverture de la cavité est plus large que le fond.

Cette géométrie de forme autorise l'empilement de plusieurs récipients les uns au dessus des autres pour constituer un gain de place lors du transport et du stockage desdits récipients.

Selon les figures 1 à 5, le récipient intègre une jupe périphérique 7 qui est raccordée à la paroi latérale 6 de la cavité 4 par une portée 8 de sorte à former un espace ouvert 9 entre ladite paroi latérale 6 et ladite jupe périphérique 7.

Cette jupe 7 participe à la stabilité du récipient 2 pour éviter qu'il ne glisse ou se renverse lorsque le chirurgien manipule l'organe.

Sur les figures, la portée 8 est sensiblement horizontale. Elle permet au chirurgien qui prépare l'organe d'y poser ses avant-bras, ce qui lui évite une fatigue musculaire et lui procure un bon appui.

Les raccords entre la portée 8 et la jupe périphérique 7 sont arrondis de sorte à améliorer le confort du chirurgien lorsqu'il s'appuie sur la portée.

La jupe périphérique 7 est légèrement évasée à partir du haut du récipient. La jupe 7 descend plus bas que le fond de la cavité 5 du récipient 2 de sorte que ce dernier ne touche pas la surface sur laquelle repose le récipient, comme expliqué plus loin.

La jupe périphérique 7 se prolonge par un petit rebord 10 horizontal dirigé vers l'extérieur qui assure une meilleure stabilité du récipient 2 lorsqu'il est posé à plat.

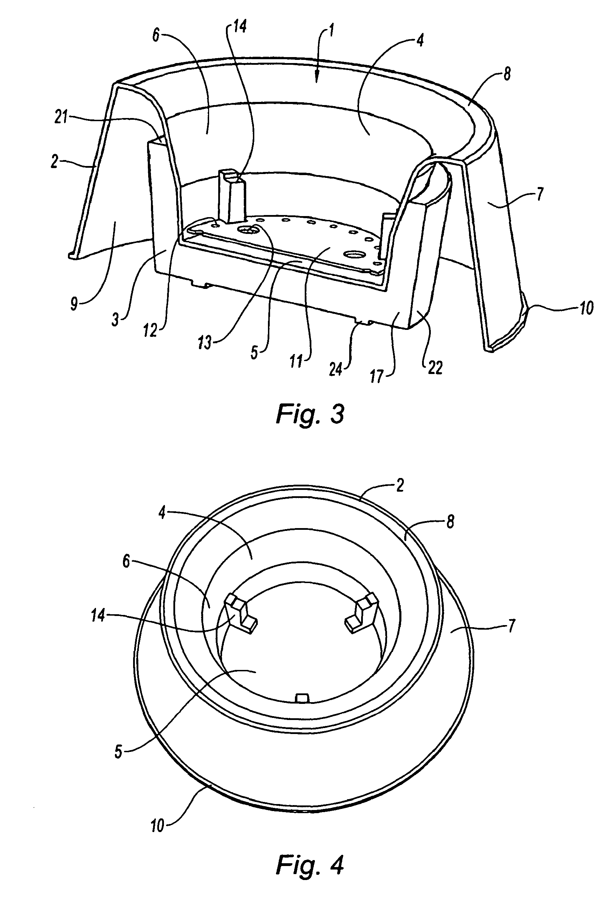

Comme représenté sur les figures 2 et 3, pour supporter l'organe dans la cavité du récipient, l'ensemble 1 comprend en outre au moins un plateau ajouré 11. Ce plateau est librement amovible de la cavité 4 du récipient. Les ajours 12 sont constitués notamment d'un jeu d'ouvertures circulaires d'un premier diamètre, par exemple d'environ 0,5 cm de diamètre. Ils sont disposés régulièrement le long du bord du plateau.

Le plateau 11 a une forme et une taille adaptées pour pouvoir être disposé dans la cavité 4 du récipient 2. Sur les figures 2, 3 et 6, le plateau est en forme de disque avec un diamètre supérieur ou égal à celui du fond 5 et inférieur à celui de l'ouverture de la cavité. Notamment, le diamètre du plateau est le même que celui du fond du récipient.

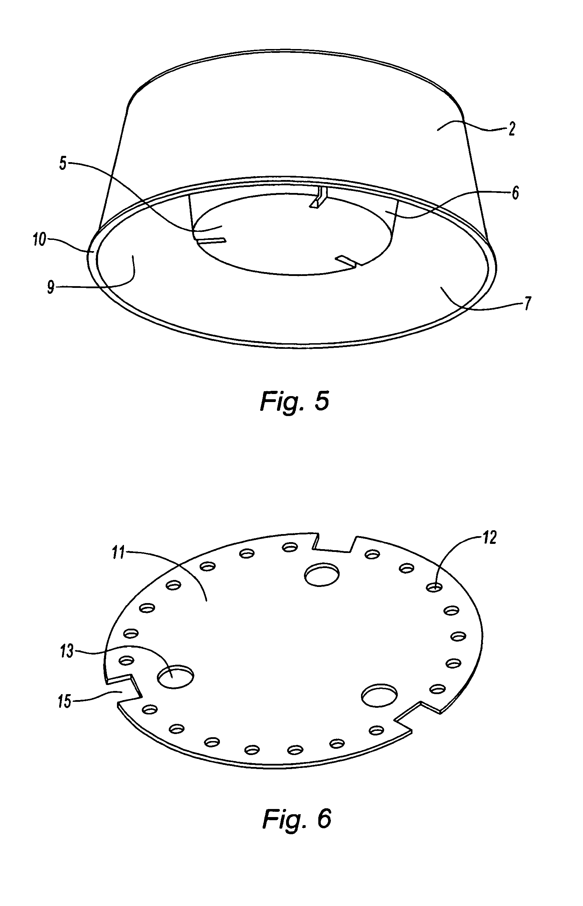

Sur la figure 6, les ajours comprennent en outre un jeu d'ouvertures circulaires 13, d'un second diamètre, plus grand que le premier diamètre. Ces ouvertures circulaires ont par exemple une taille suffisante pour y introduire les doigts d'une main, par exemple d'environ 2 cm de diamètre. Ces ouvertures, notamment au nombre de trois facilitent la prise en main du plateau pour le placer ou le retirer de la cavité 4 du récipient. Ils sont avantageusement répartis régulièrement à la périphérie du plateau.

Pour pouvoir facilement maintenir le plateau 11 dans la cavité 4 du récipient, celle-ci intègre des moyens de montage du plateau. Ces moyens de montage sont agencés pour pouvoir disposer le plateau 11 selon au moins une altitude dans la cavité 4.

Notamment, les moyens de montage comprennent un jeu d'ergots 14 sur la surface desquels le plateau 11 est destiné à prendre appui.

Notamment, le jeu d'ergots 14 comprend deux ou plus ergots, notamment trois, disposés de façon sensiblement régulière sur la paroi latérale du récipient. Plus précisément, les ergots sont disposés à la même altitude dans la cavité et sont sensiblement à égale distance les uns des autres. De façon avantageuse, pour faciliter la fabrication du récipient, les ergots sont positionnés sur la partie cylindrique de la paroi latérale.

Chacun des ergots 14 est constitué d'une pièce faisant saillie vers l'intérieur de la cavité, destinée à servir de butée pour le plateau.

Plus particulièrement, les ergots présentent une surface en forme d'escalier à deux marches, le plateau reposant sur la marche la plus basse. La contremarche stabilise le plateau à l'intérieur du récipient et évite qu'il n'endommage la paroi latérale.

Suivant la taille de l'organe à préparer, il est avantageux de pouvoir positionner le plateau à différentes altitudes dans la cavité.

Pour cela, et selon une première variante représentée sur les figures 2, 3 et 6, le plateau est muni d'encoches 15 qui sont agencées pour, par rotation du plateau, permettre le passage du plateau au-delà de la surface d'appui des ergots 14.

Les encoches 15 sont disposés à la périphérie du plateau 11 et font face aux ergots 14 de la cavité. Les encoches 15 ont une forme complémentaire à celle des ergots 14 pour permettre le passage du plateau sous les ergots.

Sur les figures 2, 3 et 6, les encoches 15 ont une forme rectangulaire, complémentaire de la géométrie des ergots 14. Le jeu d'ouvertures 13 permettant le passage de doigts fait face aux encoches 15.

Lorsque l'ergot 14 se présente sous la forme d'un escalier à deux marches, les encoches sont avantageusement destinées pour, par rotation, permettre le passage du plateau au-delà de la marche la plus basse. Le plateau est monté en position haute sur la marche la plus basse, ou en position basse dans le fond du récipient.

Selon une deuxième variante représentée sur les figures 1 à 4, les ergots comprennent une autre surface d'appui disposée sous la première surface d'appui de sorte à pouvoir monter le plateau selon une deuxième altitude.

Selon les figures, les ergots 14 présentent une surface en forme d'escalier à trois marches. Le plateau possède une taille adaptée pour reposer sur la marche intermédiaire et sur la marche la plus basse par rotation du plateau pour permettre le passage du plateau au-delà de la marche intermédiaire, mais pas au-delà de la marche la plus basse.

Dans cette configuration, chacune des contremarches aide à stabiliser le plateau aux deux altitudes.

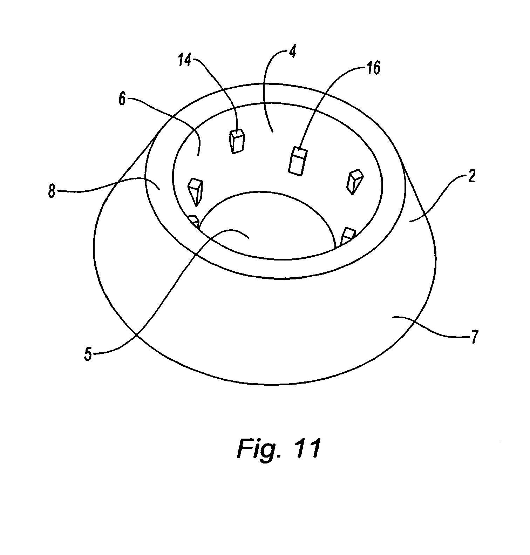

Selon une troisième variante représentée sur la figure 11, les moyens de montage comprennent un premier et deuxième jeu d'ergots 14,16 sur lequel le plateau est destiné à prendre appui, ledit deuxième jeu d'ergots étant disposé sous le premier jeu d'ergots de sorte à pouvoir monter le plateau selon une deuxième altitude.

Le deuxième jeu d'ergots peut être identique ou différent en terme de forme, nombre et taille du premier jeu d'ergots.

Selon la figure 11, le deuxième jeu d'ergots est identique au premier. Il est disposé plus près du fond que le premier jeu d'ergots et est décalé horizontalement par rapport au premier jeu d'ergots.

Chaque jeu d'ergots 14,16 comprend trois pièces en forme de prisme à base triangulaire. L'une des faces, notamment une face rectangulaire du prisme est agencée horizontalement et sert de surface d'appui pour le plateau.

Pour ces trois variantes, une solution alternative au plateau à encoches consiste à fournir un jeu de plateaux de diamètre différents pouvant se monter sur les différents moyens de montage du récipient.

Le récipient 2 est réalisé en matière thermoplastique stérilisable, tel que le polycarbonate, le glycol de polyéthylène téréphtalate, ou le poly(méthacrylate de méthyle). Il est notamment transparent.

II est avantageusement réalisé en une seule pièce, ergots compris, par thermoformage.

Cette technique est particulièrement avantageuse en ce que le fond 5 du récipient 2 présente alors une épaisseur plus faible que la portée 8. Les échanges thermiques entre le bloc support 3 et la solution de conservation contenue dans la cavité 4 sont facilités, comme expliqué ci-dessous. La portée 8 est au contraire plus épaisse et constitue ainsi une surface d'appui solide pour le chirurgien.

Les récipients 2 sont empilables les uns sur les autres pour faciliter leur transport et leur stockage.

Outre le récipient 2, l'ensemble pour la préparation des organes de l'invention comprend un bloc support 3 intégrant une chambre fermée 17 dans laquelle est disposé un produit réfrigérant.

Le produit réfrigérant comprend une solution aqueuse. Notamment, le produit réfrigérant est de l'eau ou un eutectique. Il est par exemple sous forme liquide ou gélifiée.

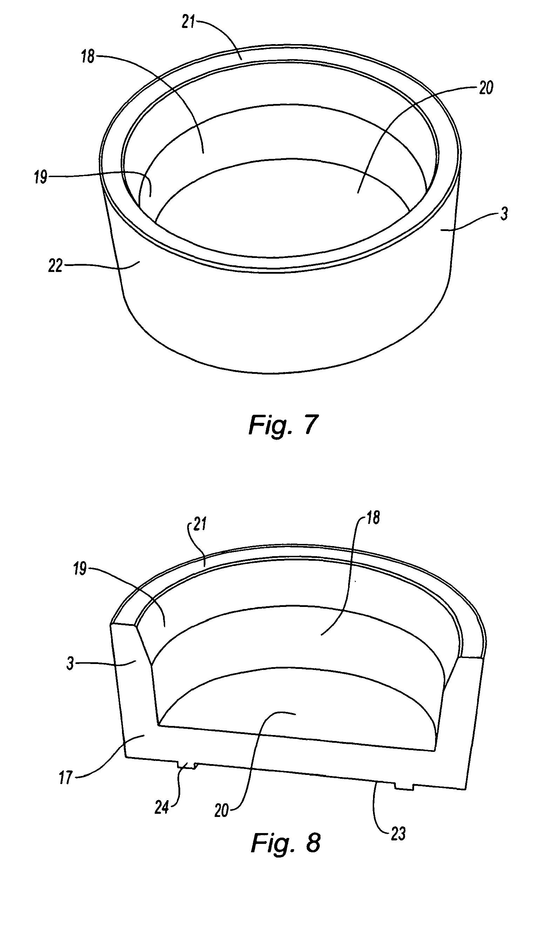

Selon l'invention et comme représenté sur les figures 7 et 8, le bloc 3 présente un logement supérieur 18 qui est agencé pour recevoir au moins le fond 5 et une partie de la paroi latérale 6 de la cavité 4, ladite chambre enveloppant ledit logement 18 pour permettre la réfrigération de l'organe.

Selon les figures 7 et 8, le bloc 3 est sous forme d'un récipient à double paroi. L'espace fermé entre les deux parois définit la chambre fermée 17. Le logement supérieur 18 du bloc est formé par la cavité du récipient à double paroi, définie par une paroi latérale intérieure 19 et un fond plat 20.

La paroi latérale intérieure 19 est raccordée à une paroi latérale extérieure 22 par une portée 21. Une base 23, à partir de laquelle s'étend la paroi latérale extérieure définit le fond extérieur du récipient à double paroi.

Selon les figures 7 et 8, la paroi latérale intérieure 19 du bloc 3 possède la même géométrie que la paroi latérale 6 du récipient 2 destiné à réceptionner l'organe. Elle s'étend vers le haut d'abord verticalement puis s'évase en suivant le même angle que la paroi latérale du récipient, de sorte à former un cylindre creux qui se prolonge en tronc de cône.

Le fond 20 et la base 23 du bloc ont également une forme de disque et la paroi latérale extérieure 22 est très légèrement évasée du bas vers le haut.

Cette forme permet également d'empiler plusieurs blocs support 3 les uns sur les autres.

Le bloc 3 a par exemple une capacité volumique comprise entre 2 et 6 L, notamment 4 litres de produits réfrigérant. Cette capacité est suffisante pour maintenir environ 2 litres de solution à 4°C pendant au moins 1 heure, notamment entre 3 et 4 heures. En outre, le poids du bloc, d'environ 4 kg, reste acceptable pour une manipulation manuelle de l'ensemble pour la préparation de l'organe.

La forme et la taille du bloc 3, notamment l'espace fermé 17 entre la double paroi est choisie de façon déterminée, en fonction du produit réfrigérant et des résultats à atteindre en terme de régulation de température.

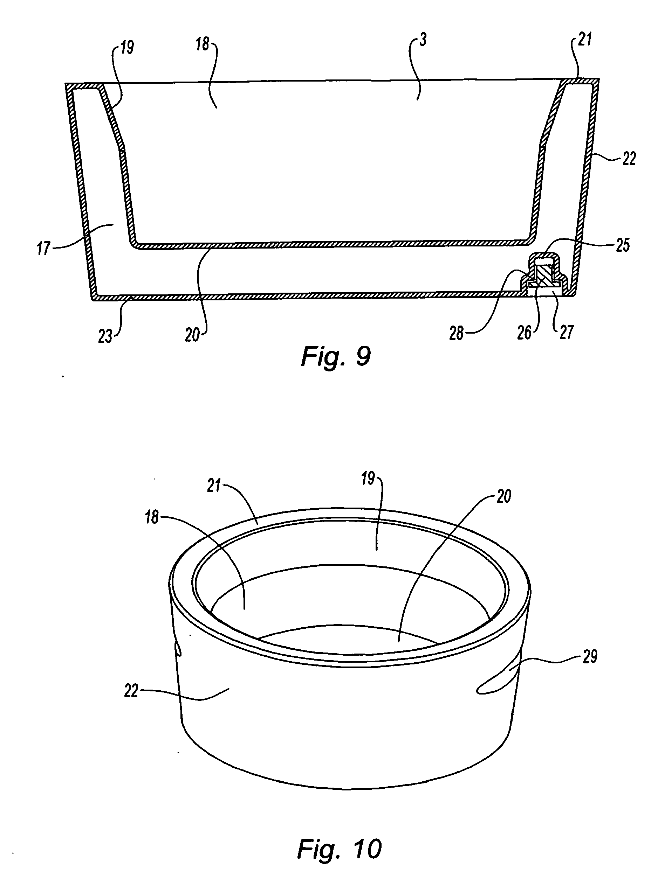

En variante représentée sur la figure 10, pour faciliter le transport du bloc support, celui-ci intègre des poignées 29. De façon avantageuse, les poignées sont au nombre de deux et formées par des dépressions agencées sur la paroi latérale extérieure 22 du bloc support 3. Les poignées sont notamment opposées l'une par rapport à l'autre.

Selon l'invention, l'espace ouvert 9 du récipient formé entre la paroi latérale 6 et la jupe périphérique 7 est agencé pour recevoir au moins la partie supérieure de la chambre 17, c'est-à-dire la partie formée entre les parois latérale intérieure 19 et latérale extérieure 22 de la chambre 19.

Ainsi, le bloc support 3 est au moins partiellement isolé de l'air ambiant, ce qui contribue à la régulation en température de la solution de conservation et de l'organe dans le récipient 2.

Avantageusement, la cavité 4 du récipient 3 et le logement 18 présentent une géométrie de révolution.

Selon les figures, la cavité 4 du récipient 2 et le logement 18 comprennent une partie cylindrique qui se prolonge en une partie tronconique s'élargissant vers le haut.

La cavité 4 est emboîtée dans le logement par coopération de forme, ladite coopération étant agencée pour permettre la rotation du récipient 2 relativement au bloc support 3.

Ainsi, le récipient 2 est mobile par rotation dans le logement 18. Le chirurgien tourne alors facilement le récipient 2 pour accéder à différents endroits de l'organe, sans déplacer le bloc support 3 plus lourd. En outre en appliquant des mouvements de rotation dans un sens et dans l'autre, la solution de conservation est brassée ce qui permet d'homogénéiser sa température le cas échéant.

Avantageusement, le récipient 2 s'emboîte dans le logement 18 du bloc à frottement doux. Il faut ainsi appliquer une certaine force pour faire tourner le récipient 2 sur son logement 18.

De façon avantageuse, le bloc support 3 s'étend sous le récipient 2, de sorte à faciliter l'actionnement de la rotation du récipient sur le bloc support. En effet, la jupe périphérique 7 du récipient 2 ne touche alors pas la surface sur laquelle le bloc support 3 repose. Il n'y a donc pas de force de frottement entre cette surface et le récipient 2.

Dans cette variante, la base 23 du bloc support 3 est munie de patins 24 sous forme d'une mousse élastomère qui participe à la stabilité du bloc.

Selon la figure 9, pour introduire le produit réfrigérant dans le bloc 3, celui-ci comporte un orifice 25 qui peut être obturé par un bouchon 26.

Selon la figure 9, la base 23 du bloc présente une dépression 27 vers l'intérieur du bloc sur l'extrémité de laquelle se situe l'orifice 25.

La dépression 27 comporte en outre un joint 28 pour assurer l'étanchéité du bloc avec le bouchon 26.

De façon avantageuse, le produit réfrigérant est introduit au moment de la fabrication à l'intérieur du bloc support 3, par l'intermédiaire de l'orifice 25. L'orifice 25 est ensuite obturé par le bouchon 26 qui est ensuite fixé de façon définitive, par exemple, par soudage. Il n'est alors plus possible d'extraire ou d'introduire un produit dans le bloc.

Le bloc est réalisé en matériau thermoplastique stérilisable tel que le polypropylène ou le polyamide. II est formé notamment d'une seule pièce par rotomoulage ou soufflage. Les formes évasées du bloc facilitent la mise en oeuvre de cette technique de fabrication.

Selon une réalisation particulière (non représentée), l'ensemble comprend un indicateur de température et/ou de niveau du produit réfrigérant dans la chambre et/ou de la solution de conservation.

L'indicateur de température est par exemple un thermomètre sous forme de bande autocollante collée dans la cavité 4 du récipient 2 pour vérifier la température de la solution de conservation ou sur le bloc support 3 pour vérifier la température du produit réfrigérant.

En variante, l'ensemble comprend un indicateur de niveau qui est disposé dans la cavité 4 du récipient 2. Cet indicateur est par exemple formé d'une graduation d'échelle gravée dans la cavité 4 du récipient 2 et qui permet de déterminer le volume de solution de conservation présent dans le récipient.

L'indicateur de niveau peut également être disposé sur le bloc support 3 pour vérifier qu'il n'y a pas eu de fuite de produit réfrigérant ou pour indiquer au chirurgien le volume de produit réfrigérant à introduire dans le bloc le cas échéant.

L'ensemble selon l'invention est notamment stérile et à usage unique. Chacun des éléments de l'ensemble est stérilisé, par exemple par chaleur, radiation ou oxyde d'éthylène.

Chacun des éléments, notamment le récipient, le plateau ajouré, le bloc support pré-rempli du produit réfrigérant ou non, est emballé stérilement ensemble ou séparément.

Avantageusement, le récipient et le plateau sont placés dans un premier emballage stérile, et le bloc support est emballé séparément dans un second emballage stérile. Ainsi, il est possible pour le chirurgien de disposer le bloc dans un lieu réfrigérant, comme un réfrigérateur ou congélateur, seul et non pas l'ensemble complet, qui prendrait beaucoup plus de place.

L'ensemble étant stérile, il n'est pas nécessaire de disposer un champ stérile à l'intérieur du dispositif lors de la préparation de l'organe.

En variante, seul le récipient et éventuellement le plateau est à usage unique. Le bloc froid est, quant à lui réutilisable.

On décrit maintenant une utilisation particulière de l'ensemble selon l'invention.

Le bloc support 3 est préalablement congelé.

Dans la salle d'opération, le chirurgien installe le récipient 2 sur le bloc support 3. Il positionne le plateau 11 selon l'altitude appropriée. Il verse de la solution de conservation d'organe dans le récipient 2. Les ajours 12,13 dans le plateau laissent s'écouler librement la solution dans le récipient jusque dans le fond.

Il suffit alors de déposer l'organe sur le plateau pour le préparer à la transplantation.

Une fois la préparation de l'organe achevée, l'ensemble à usage unique est jeté.

## Revendications

1. Ensemble (1) pour la préparation d'organes en vue de leur transplantation, comprenant :
- un récipient (2) intégrant une cavité (4) destinée à réceptionner l'organe et une solution de conservation d'organes, ladite cavité (4) présentant un fond (5) et une paroi latérale (6), une jupe périphérique (7) étant raccordée à la paroi latérale de la cavité par une portée (8) de sorte à former un espace ouvert (9) entre ladite paroi latérale (6) et ladite jupe périphérique (7), et
- un bloc support (3) intégrant une chambre fermée (17) dans laquelle est disposé un produit réfrigérant, au moins la partie supérieure de ladite chambre étant disposée dans l'espace ouvert (9), ledit bloc (3) présentant un logement supérieur (18) qui est agencé pour recevoir au moins le fond (5) et une partie de la paroi latérale (6) de la cavité (4), ladite chambre (17) enveloppant ledit logement (18) pour permettre la réfrigération de l'organe.

2. Ensemble selon la revendication 1, **caractérisé en ce que** le logement (18) est délimité par une paroi latérale intérieure (19) qui est raccordée à une paroi latérale extérieure (22) par une portée (21), la partie supérieure de la chambre (17) étant formée entre les parois latérale intérieure (19) et extérieure (22).

3. Ensemble selon la revendication 1 ou 2, **caractérisé en ce qu'**il comprend en outre au moins un plateau ajouré (11) pour supporter l'organe dans la cavité (4).

4. Ensemble selon la revendication 3, **caractérisé en ce que** la cavité (4) intègre des moyens de montage du plateau (11), lesdits moyens étant agencés pour pouvoir disposer ledit plateau (11) selon au moins une altitude dans la cavité (4).

5. Ensemble selon la revendication 4, **caractérisé en ce que** les moyens de montage comprennent un jeu d'ergots (14) sur la surface desquels le plateau (11) est destiné à prendre appui.

6. Ensemble selon la revendication 5, **caractérisé en ce que** le plateau (11) est muni d'encoches (15) qui sont agencés pour, par rotation du plateau, permettre le montage du plateau (11) au-delà de la surface d'appui des ergots (14).

7. Ensemble selon la revendication 6, **caractérisé en ce que** les moyens de montage comprennent un deuxième jeu d'ergots (16) sur lequel le plateau (11) est destiné à prendre appui, ledit deuxième jeu d'ergots (16) étant disposé sous le premier jeu d'ergots (14) de sorte à pouvoir monter le plateau selon une deuxième altitude.

8. Ensemble selon la revendication 6, **caractérisé en ce que** les ergots (14) comprennent une autre surface d'appui disposée sous la première surface d'appui de sorte à pouvoir monter le plateau selon une deuxième altitude.

9. Ensemble selon l'une quelconque des revendications 1 à 8, **caractérisé en ce que** le produit réfrigérant comprend une solution aqueuse.

10. Ensemble selon l'une quelconque des revendications 1 à 9, **caractérisé en ce que** la cavité (4) et le logement (17) présentent une géométrie de révolution.

11. Ensemble selon la revendication 10, **caractérisé en ce que** la cavité (4) est emboîtée dans le logement (17) par coopération de forme, ladite coopération étant agencée pour permettre la rotation du récipient (2) relativement au bloc support (3).

12. Ensemble selon la revendication 11, **caractérisé en ce que** le bloc support (3) s'étend sous le récipient (2), de sorte à faciliter l'actionnement de la rotation du récipient (2) sur le bloc support (3).

13. Ensemble selon l'une quelconque des revendications 1 à 12, **caractérisé en ce qu'**il est emballé stérilement.

14. Ensemble selon l'une quelconque des revendications 1 à 13, **caractérisé en ce qu'**il comprend un indicateur de température et/ou de niveau du produit réfrigérant dans la chambre et/ou de la solution de conservation dans la cavité.

## Patentansprüche

1. Einheit (1) zur Vorbereitung von Organen im Hinblick auf deren Transplantation, umfassend:
- einen Behälter (2), der einen Hohlraum (4) integriert, der dazu vorgesehen ist, das Organ und eine Lösung zur Konservierung von Organen aufzunehmen, wobei der besagte Hohlraum (4) einen Boden (5) und eine Seitenwand (6) aufweist, wobei ein Umfangsmantel (7) mit der Seitenwand des Hohlraums durch eine Sitzfläche (8) derart verbunden ist, dass ein offener Raum (9) zwischen der besagten Seitenwand (6) und dem besagten Umfangsmantel (7) gebildet wird, und
- einen Trageblock (3), der eine geschlossene Kammer (17) integriert, in der ein Kühlmittel angeordnet ist, wobei mindestens der obere Teil der besagten Kammer in dem offenen Raum (9) angeordnet ist, wobei der besagte Block (3) eine obere Aufnahme (18) aufweist, die eingerichtet ist, um mindestens den Boden (5) und einen Teil der Seitenwand (6) des Hohlraums (4) aufzunehmen, wobei die besagte Kammer (17) die besagte Aufnahme (18) umhüllt, um die Kühlung des Organs zu ermöglichen.

2. Einheit nach Anspruch 1, **dadurch gekennzeichnet, dass** die Aufnahme (18) durch eine innere Seitenwand (19) abgegrenzt ist, die mit einer äußeren Seitenwand (22) durch eine Sitzfläche (21) verbunden ist, wobei der obere Teil der Kammer (17) zwischen der inneren Seitenwand (19) und der äußeren Seitenwand (22) gebildet wird.

3. Einheit nach Anspruch 1 oder 2, **dadurch gekennzeichnet, dass** sie außerdem mindestens eine durchbrochene Platte (11) zum Tragen des Organs in dem Hohlraum (4) umfasst.

4. Einheit nach Anspruch 3, **dadurch gekennzeichnet, dass** der Hohlraum (4) Mittel zur Montage der Platte (11) integriert, wobei die besagten Mittel eingerichtet sind, um die besagte Platte (11) gemäß mindestens einer Höhe in dem Hohlraum (4) anordnen zu können.

5. Einheit nach Anspruch 4, **dadurch gekennzeichnet, dass** die Montagemittel einen Satz von Zapfen (14) umfassen, auf deren Oberfläche die Platte (11) zum Aufliegen kommen sollen.

6. Einheit nach Anspruch 5, **dadurch gekennzeichnet, dass** die Platte (11) mit Einkerbungen (15) versehen ist, die eingerichtet sind, um durch Drehung der Platte die Montage der Platte (11) jenseits der Auflagefläche der Zapfen (14) zu ermöglichen.

7. Einheit nach Anspruch 6, **dadurch gekennzeichnet, dass** die Montagemittel einen zweiten Satz von Zapfen (16) umfassen, auf dem die Platte (11) zum Aufliegen kommen sollen, wobei der besagte zweite Satz von Zapfen (16) derart unter dem ersten Satz von Zapfen (14) angeordnet ist, dass die Platte gemäß einer zweiten Höhe montiert werden kann.

8. Einheit nach Anspruch 6, **dadurch gekennzeichnet, dass** die Zapfen (14) eine andere Auflagefläche umfassen, die derart unter der ersten Auflagefläche angeordnet ist, dass die Platte gemäß einer zweiten Höhe montiert werden kann.

9. Einheit nach einem der Ansprüche 1 bis 8, **dadurch gekennzeichnet, dass** das Kühlmittel eine wässrige Lösung umfasst.

10. Einheit nach einem der Ansprüche 1 bis 9, **dadurch gekennzeichnet, dass** der Hohlraum (4) und die Aufnahme (17) eine Drehgeometrie aufweisen.

11. Einheit nach Anspruch 10, **dadurch gekennzeichnet, dass** der Hohlraum (4) in die Aufnahme (17) durch eine Formverbindung eingepasst ist, wobei die besagte Verbindung dazu eingerichtet ist, die Drehung des Behälters (2) in Bezug auf den Trageblock (3) zu ermöglichen.

12. Einheit nach Anspruch 11, **dadurch gekennzeichnet, dass** der Trageblock (3) sich derart unter dem Behälter (2) erstreckt, dass die Betätigung der Drehung des Behälters (2) auf dem Trageblock (3) erleichtert wird.

13. Einheit nach einem der Ansprüche 1 bis 12, **dadurch gekennzeichnet, dass** sie steril verpackt ist.

14. Einheit nach einem der Ansprüche 1 bis 13, **dadurch gekennzeichnet, dass** sie eine Anzeige der Temperatur und/oder des Pegels des Kühlmittels in der Kammer und/oder der Konservierungslösung in dem Hohlraum umfasst.

## Claims

1. Assembly (1) for preparing organs with a view to the transplantation thereof, comprising:
- a container (2) incorporating a cavity (4) intended to receive the organ and an organ preservation solution, said cavity (4) having a base (5) and a side wall (6), a peripheral skirt (7) being connected to the side wall of the cavity by a bearing surface (8) so as to form an open gap (9) between said side wall (6) and said peripheral skirt (7), and
- a support unit (3) incorporating a sealed chamber (17) wherein a coolant product is arranged, at least the upper part of said chamber being arranged in the open gap (9), said unit (3) having an upper housing (18) arranged to receive at least the base (5) and a part of the side wall (6) of the cavity (4), said chamber (17) enclosing said housing (18) to enable refrigeration of the organ.

2. Assembly according to claim 1, **characterised in that** the housing (18) is defined by an inner side wall (19) connected to an outer side wall (22) by a bearing surface (21), the upper part of the chamber (17) being formed between the inner (19) and outer (22) side walls.

3. Assembly according to claim 1 or 2, **characterised in that** it further comprises at least one perforated tray (11) for supporting the organ in the cavity (4).

4. Assembly according to claim 3, **characterised in that** the cavity (4) incorporates means for mounting the tray (11), said means being arranged to be able to arranged said tray (11) according to at least one height in the cavity (4).

5. Assembly according to claim 4, **characterised in that** the mounting means comprise a set of pins (14) on the surface whereof the tray (11) is intended to bear.

6. Assembly according to claim 5, **characterised in that** the tray (11) is equipped with notches (15) arranged for, by rotating the tray, enabling mounting of the tray (11) beyond the bearing surface of the pins (14).

7. Assembly according to claim 6, **characterised in that** the mounting means comprise a second set of pins (16) whereon the tray (11) is intended to bear, said second set of pins (16) being arranged under the first set of pins (14) so as to be able to mount the tray according to a second height.

8. Assembly according to claim 6, **characterised in that** the pins (14) comprise a further bearing surface arranged under the first bearing surface so as to be able to mount the tray according to a second height.

9. Assembly according to any of claims 1 to 8, **characterised in that** the coolant product comprises an aqueous solution.

10. Assembly according to any of claims 1 to 9, **characterised in that** the cavity (4) and housing (17) have a revolving geometry.

11. Assembly according to claim 10, **characterised in that** the cavity (4) is interlocked in the housing (17) by means of shape engagement, said engagement being arranged to enable the rotation of the container (2) in relation to the support unit (3).

12. Assembly according to claim 11, **characterised in that** the support unit (3) extends under the container (2), so as to facilitate the actuation of the rotation of the container (2) on the support unit (3).

13. Assembly according to any of claims 1 to 12, **characterised in that** it is packaged sterilely.

14. Assembly according to any of claims 1 to 13, **characterised in that** it comprises a temperature and/or level indicator of the coolant product in the chamber and/or of the preservation solution in the cavity.
